# FASCICULE DE BREVET EUROPEEN

(11) **EP 0 366 563 B1**
(45) Date de publication et mention de la délivrance du brevet: **12.01.1994**
(21) Numéro de dépôt: 89402981.8
(22) Date de dépôt: 27.10.1989
(51) Int. Cl.: F16H 1/44

(54) **Différentiel autobloquant**
Selbstsperrendes Differential
Self-locking differential

(30) Priorité: 28.10.1988 FR 8814158; 23.02.1989 FR 8902351; 13.12.1988 FR 8816392; 23.02.1989 FR 8902350
(43) Date de publication de la demande: 02.05.1990
(73) Titulaire: STE PIERRE FERRY, 92600 Asnières (FR)
(72) Inventeur: Gobert, Michel, F-92600 Asnières (FR)
(74) Mandataire: Geismar, Thierry

(56) Documents cités:
- DE-C- 888 808
- DE-C- 926 469
- FR-A- 1 441 293
- FR-A- 1 572 402
- FR-A- 1 596 579
- FR-A- 2 380 158
- FR-A- 2 547 883
- FR-A- 2 604 504
- US-A- 2 855 805
- US-A- 3 055 234

## Description

La présente invention concerne un différentiel autobloquant.

On sait qu'un différentiel a pour fonction d'entraîner deux arbres de sortie à partir d'un même arbre d'entrée, par exemple pour entraîner les deux roues motrices d'un véhicule. Le différentiel permet d'entraîner ces deux arbres de sortie à des vitesses différentes, par exemple en virage dans le cas d'un véhicule.

L'inconvénient des différentiels traditionnels réside dans le fait que le couple de sortie sur les deux arbres est limité par le plus faible des couples résistants.

On a déjà proposé de résoudre ce problème à l'aide de différentiels dits autobloquants ou à glissement limité.

Ces différentiels comprennent un organe d'entrée, deux organes de sortie , deux arbres de sortie associés chacun à l'un des organes de sortie, et des moyens de solidarisation mobiles axialement pour solidariser par leur déplacement axial deux des trois organes d'entrée et de sortie.

C'est ainsi que le document FR-A-2 547 883 décrit un tel différentiel dans lequel les couples de sortie sont comparés entre eux et que dans le document FR-A- 1 596 579, chaque couple de sortie est comparé à un couple prédéterminé.

Ce déplacement axial peut d'ailleurs être limité au rattrapage des jeux, le paramètre de fonctionnement essentiel n'étant pas le déplacement en lui-même mais la force appliquée aux moyens de solidarisation.

Il résulte de cette solidarisation qui peut être totale ou partielle selon les moyens utilisés, que lorsque le couple résistant à une des sorties diminue, le couple d'entrée se trouve plus ou moins réparti entre les deux sorties.

Ces différentiels autobloquants traditionnels présentent toutefois l'inconvénient qu'une friction existe en permanence entre leurs deux sorties dès lors qu'un couple est appliqué à l'entrée.

La présente invention vise à pallier cet inconvénient.

A cet effet, l'invention a pour objet un différentiel autobloquant, comprenant un organe d'entrée, deux organes de sortie, deux arbres de sortie associés chacun à l'un des organes de sortie, et des moyens de solidarisation mobiles axialement pour solidariser par leur déplacement axial deux des trois organes d'entrée et de sortie, caractérisé par le fait qu'il comprend des moyens de blocage, pour s'opposer audit déplacement axial des moyens de solidarisation tant que le couple résistant sur chaque arbre de sortie conserve une valeur suffisante par rapport au couple d'entrée.

Dans le cas d'un différentiel à pignons coniques, où l'organe d'entrée est constitué par un porte-satellites et les deux organes de sortie sont constitués par deux pignons planétaires, les moyens de blocage peuvent être disposés entre au moins l'un des pignons planétaires et l'arbre de sortie qui lui est associé.

Dans une variante de réalisation, les moyens de blocage sont constitués par les pignons eux-mêmes, qui, par leur réaction de denture, s'opposent aux moyens de solidarisation, chaque pignon planétaire pouvant alors être réalisé d'une seule pièce avec l'arbre de sortie qui lui est associé.

Dans un autre mode de réalisation, lesdits moyens de blocage peuvent comprendre au moins une première tige radiale engagée dans une première rainure radiale à section transversale en V, la première tige radiale étant entraînée en rotation par l'un des éléments constitués par le pignon planétaire et par l'arbre de sortie et la première tige radiale étant formée dans un organe entraîné en rotation par l'autre de ces éléments, le couple résistant étant transmis de l'arbre de sortie, au pignon planétaire par la force d'appui de ladite première tige radiale sur l'un des flancs de ladite première rainure et le mouvement axial relatif de la première tige et de la première rainure radiales s'opposant au déplacement axial des moyens de solidarisation.

On comprend que l'axe de la tige étant parallèle à l'arête du V, les deux flancs de celui-ci forment des rampes de sorte que, tant que le couple de sortie transmis du pignon planétaire à l'arbre de sortie conserve une valeur suffisante, la tige a tendance à monter sur ces rampes. Le mouvement axial relatif qui en résulte est utilisé pour s'opposer au mouvement axial des moyens de solidarisation, et par conséquent, pour bloquer ces derniers moyens.

Si le couple résistant diminue, la tige reprend alors sa place dans la rainure permettant ainsi aux moyens de solidarisation de se déplacer axialement et par conséquent, de venir solidariser les deux organes souhaités parmi les trois organes d'entrée et de sortie.

Bien entendu, la tige ne constitue pas obligatoirement un organe indépendant de l'élément dans lequel elle est montée. Elle peut par exemple être constituée d'une simple nervure de section semi-circulaire ou en V formée sur une surface de cet élément.

De même, les flancs de la rainure en V peuvent ne pas être symétriques et éventuellement ne pas être plans, par exemple en vue d'obtenir une progressivité de la solidarisation.

La première tige radiale peut en outre être engagée dans deux premières rainures radiales dont les ouvertures se font face, l'une de ces rainures étant formée dans un organe solidaire en rotation du pignon planétaire et l'autre rainure étant formée dans un organe solidaire en rotation de l'arbre de sortie.

La tige a alors pour effet de tendre à écarter axialement les deux organes porte-rainure, en s'appuyant sur les flancs opposés des deux rainures.

Dans un premier mode de réalisation, les moyens de solidarisation comprennent un embrayage à deux ensembles de disques intercalés, les disques d'un ensemble étant solidaires en rotation de l'un des organes à solidariser et les disques de l'autre ensemble étant solidaires en rotation de l'autre organe à solidariser, ledit déplacement axial provoquant une friction d'un des ensembles de disques sur l'autre.

Dans un autre mode de réalisation, les moyens de solidarisation peuvent comprendre un ensemble à crabots comprenant par exemple les extrémités en vis-à-vis des arbres des pignons planétaires, l'un des arbres étant canelé intérieurement et l'autre arbre étant canelé extérieurement.

On pourrait également prévoir un embrayage à cône.

Le différentiel selon l'invention peut comprendre des moyens élastiques tendant à amener les moyens de solidarisation en position axiale de solidarisation, les moyens de blocage agissant à l'encontre de ces moyens élastiques.

Il peut également comprendre une deuxième tige radiale engagée dans une deuxième rainure radiale, cette deuxième tige radiale étant solidaire en rotation de l'un des éléments constitués par l'organe d'entrée et par les moyens de solidarisation, et la deuxième rainure radiale étant formée dans l'autre de ces éléments, le déplacement axial étant provoqué par la force d'appui de la deuxième tige sur l'un des flancs de la deuxième rainure.

Dans ce mode de réalisation, le même phénomène que décrit ci-dessus en ce qui concerne le couple résistant se produit au niveau du couple d'entrée. Ce dernier a tendance à provoquer la montée de la deuxième tige sur l'une des rampes formée par la deuxième rainure en V et par conséquent à provoquer un déplacement axial relatif entre l'organe d'entrée et les moyens de solidarisation.

Plus particulièrement, le couple d'entrée peut être transmis du boîtier du différentiel, ou d'un arbre d'entrée, à l'organe d'entrée par l'intermédiaire de la deuxième tige.

Dans le cas d'un différentiel épicycloïdal, les moyens de solidarisation peuvent agir par un déplacement axial de l'organe d'entrée sous l'action de moyens de poussée agissant lors d'une diminution d'un des couples de sortie.

Les moyens de blocage peuvent alors comprendre au moins une troisième tige radiale engagée dans une troisième rainure radiale à section en V, la troisième tige étant solidaire en rotation de l'un des éléments constitués par l'arbre de sortie correspondant à l'un des organes de sortie et par cet organe de sortie lui-même, et la troisième rainure étant formée dans l'autre de ces éléments, le couple résistant correspondant étant appliqué à l'organe de sortie par l'intermédiaire de la force d'appui exercée par la troisième tige sur l'un des flancs de la troisième rainure.

Le couple résistant provoque la montée de la troisième tige sur l'une des rampes formées par la troisième rainure en V, d'où un déplacement axial relatif entre l'organe de support de la troisième tige et l'élément dans lequel est formée la troisième rainure, ce déplacement axial étant utilisé pour bloquer les moyens de poussée. Si ce couple résistant diminue, la troisième tige reprend sa place dans la troisième rainure permettant ainsi un déblocage des moyens de poussée, et par conséquent une solidarisation des deux organes souhaités parmi les trois organes d'entrée et de sortie.

Bien entendu, le sens axial d'ouverture de la troisième rainure doit être tel que les forces d'appui de la troisième tige sur la troisième rainure s'opposent aux moyens de poussée.

Plus particulièrement, la troisième tige radiale peut être montée solidaire en rotation de l'arbre de sortie correspondant au pignon planétaire et la troisième rainure radiale peut être formée dans ledit pignon planétaire.

En ce qui concerne l'autre sortie, plusieurs modes de réalisation peuvent être envisagés.

Dans un mode de réalisation, l'organe d'entrée comprend la couronne du train épicycloïdal et le deuxième organe de sortie comprend le porte-satellites du train épicycloïdal, au moins une quatrième tige étant montée solidaire en rotation du porte-satellites, et engagée dans une rainure radiale à section en V formée dans un organe solidaire de l'arbre de sortie correspondant au porte-satellites, le couple résistant étant transmis dudit arbre de sortie au porte-satellites par l'intermédiaire de ladite quatrième tige.

Là encore, un couple résistant suffisant provoque un écartement axial de l'organe de support de la quatrième tige par rapport à l'arbre de sortie correspondant au porte-satellites, ce déplacement axial bloquant les moyens de poussée. Une diminution du couple résistant ramène au contraire la quatrième tige dans la quatrième rainure, permettant ainsi le déplacement axial de l'organe d'entrée, et par conséquent la solidarisation des deux organes souhaités parmi les trois organes d'entrée et de sortie.

Dans ce mode de réalisation, ladite quatrième tige peut être montée dans un organe de contre-pression solidaire en rotation du porte-satellites, lesdits moyens de solidarisation étant montés entre la couronne et ledit organe de contre-pression.

Plus particulièrement, le pignon planétaire et ledit organe solidaire de l'arbre de sortie peuvent être montés en butée l'un contre l'autre et disposés de façon coulissante axialement par rapport au boîtier du différentiel.

Dans un autre mode de réalisation, l'organe d'entrée comprend le porte-satellites du train épicycloïdal et le deuxième organe de sortie comprend la couronne du train épicycloïdal, au moins une cinquième tige radiale étant montée solidaire en rotation de l'arbre de sortie correspondant à la couronne, et engagée dans une cinquième rainure radiale à section en V formée dans la couronne, le couple résistant étant transmis dudit arbre de sortie à la couronne par l'intermédiaire de ladite cinquième tige.

Le fonctionnement de ce mode de réalisation est similaire à celui du mode décrit ci-dessus.

Dans cet autre mode de réalisation, ladite couronne peut être montée fixe axialement par rapport au boîtier du différentiel, lesdits moyens de solidarisation étant disposés entre ladite couronne et le planétaire.

La cinquième tige peut être plus particulièrement montée dans un organe solidaire dudit arbre de sortie, cet organe et le pignon planétaire étant en appui l'un contre l'autre, et disposés de façon coulissante par rapport au boîtier du différentiel.

Dans tous les cas, on peut de plus prévoir des moyens élastiques de pré-charge ou de progressivité pour les moyens de solidarisation.

Ces moyens de pré-charge peuvent agir, selon le cas, soit dans le même sens que les moyens de poussée, soit en sens contraire.

Ces mêmes moyens élastiques, ou d'autres moyens élastiques peuvent également assurer la progressivité de la solidarisation.

Bien entendu, ce qui a été dit précédemment sur la réalisation des premières tige et rainure s'applique également aux autres, de même que ce qui a été dit sur le déplacement axial provoqué par leur coopération.

On peut en outre remplacer l'une ou plusieurs des première à cinquième tiges par une came engagée au fond de la rainure et dans un embrèvement formé dans l'organe qui portait la tige.

Cette came peut avoir une section sensiblement triangulaire, un de ses sommets étant engagé dans la rainure et sa base opposée étant engagée dans l'embrèvement.

Dans un mode de réalisation particulier, l'organe dans lequel est formée la rainure, et l'organe dans lequel est formé l'embrévement comportent des butées pour limiter leur glissement angulaire relatif.

On décrira maintenant à titre d'exemple non limitatif quatre modes de réalisation particuliers de l'invention en référence aux dessins annexés dans lesquels :
- la figure 1 est une vue en demi-coupe axiale d'un différentiel à pignons coniques selon un premier mode de réalisation,
- les figures 2a, 2b, et 2c sont des vues partielles en coupe selon la ligne II-II de la figure 1 en illustrant le fonctionnement,
- la figure 3 est une vue en coupe axiale d'un deuxième mode de réalisation,
- la figure 4 est une vue partielle en coupe selon IV-IV de la figure 3,
- la figure 5 est une demi-vue en coupe axiale d'un différentiel à train épicycloïdal selon un troisième mode de réalisation de l'invention,
- la figure 6 en est une vue en coupe transversale à plus petite échelle,
- les figures 7a et 7b illustrent le fonctionnement de ce troisième mode de réalisation,
- la figure 8 est une demi-vue en coupe axiale d'un différentiel selon un quatrième mode de réalisation,
- la figure 9 en est une vue en coupe transversale à plus petite échelle,
- les figures 10a et 10b illustrent le fonctionnement de ce quatrième mode de réalisation, et
- les figures 11 et 12 représentent une variante de réalisation dans deux positions différentes.

Les éléments communs aux deux premiers modes de réalisation ont reçu les mêmes chiffres de référence assortis de la lettre a pour le premier mode de réalisation, et de la lettre b pour le second.

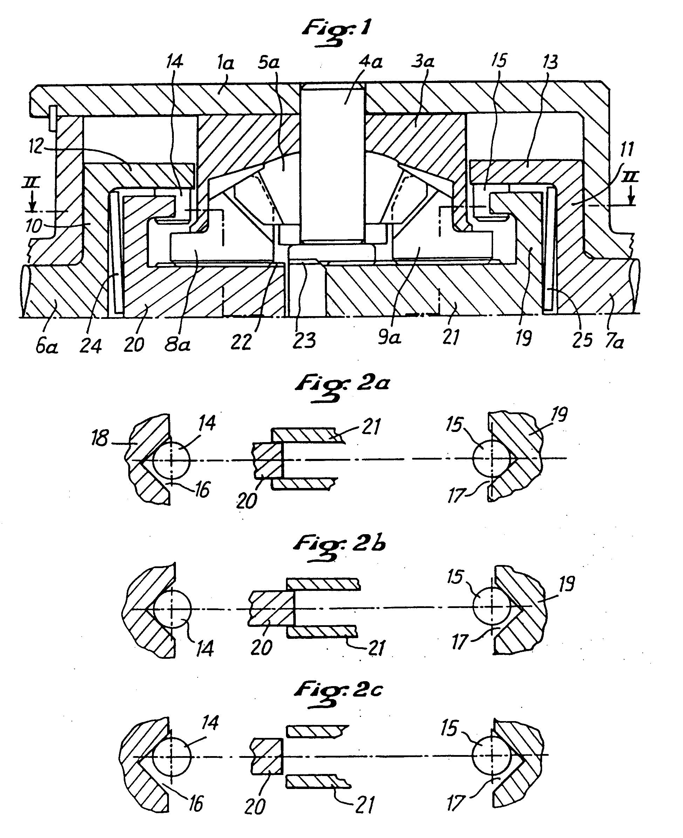

Ces deux différentiels à pignons coniques comportent de façon connue un boîtier 1a, 1b solidaire d'un pignon conique d'entrée 2b (non représenté à la figure 1), un porte-satellites 3a, 3b solidaire en rotation du boîtier 1a, 1b et supportant les axes 4a, 4b des satellites 5a, 5b, deux arbres de sortie 6a, 6b et 7a, 7b respectivement, et deux pignons planétaires 8a, 8b et 9a, 9b respectivement, engrenant avec les satellites 5a, 5b.

On se référera maintenant plus particulièrement au premier mode de réalisation de la figure 1.

Les arbres de sortie 6a et 7a se terminent à l'intérieur du boîtier 1a par des plateaux 10 et 11 respectivement, en appui sur les flasques du boîtier, ces plateaux supportant chacun à leur périphérie un ensemble de prolongements axiaux 12 et 13. Ces prolongements portent des tiges radiales 14, 15.

Chaque tige radiale est engagée dans une rainure radiale 16, 17 formée respectivement dans des saillies radiales 18, 19 d'arbres canelés 20, 21 coaxiaux aux arbres de sortie 6a et 7a.

Les arbres 20 et 21 portent, dans leur zone axialement extérieure, des canelures extérieures sur lesquelles sont engagés des pignons 8a et 9a respectivement.

A son extrémité radialement intérieure, l'arbre canelé 20 porte également des canelures extérieures 22 alors que l'arbre 21 porte à son extrémité radialement intérieure des canelures intérieures 23 susceptibles de recevoir les canelures 22 de l'arbre 20.

Enfin, deux rondelles Belleville 24 et 25 sont disposées entre les faces intérieures des plateaux 10 et 11 et les extrémités axialement extérieures des arbres 20 et 21, pour presser ces deux arbres en direction l'un de l'autre de manière à tendre à engager les canelures 22 dans les canelures 23.

Comme montré aux figures 2, les canelures 16 et 17 ont leurs ouvertures qui se font face en direction du plan de symétrie du différentiel.

Le couple d'entrée appliqué au boîtier 1a est transmis aux arbres 20 et 21 par l'intermédiaire du porte-satellites 3a, des pignons satellites 5a, et des pignons planétaires 8a, 9a.

Il est ensuite transmis, par l'intermédiaire des tiges 14 et 15 qui prennent appui sur les flancs des rainures 16 et 17, aux arbres de sortie 6a et 6b.

La figure 2c représente le différentiel dans son fonctionnement normal. Dans cet état de fonctionnement, les couples résistants sur les arbres de sortie 6a et 7a produisent un glissement relatif en rotation des tiges 14 et 15 le long des rampes formées par les rainures 16 et 17 respectivement, ce glissement en rotation provoquant un écartement des arbres 20 et 21 contre l'action des rondelles 24 et 25.

Dans cette position où les arbres 20 et 21 sont maintenus écartés, les canelures 22 et 23 ne sont pas engagées de sorte que ces arbres 20 et 21 sont indépendants en rotation. Le fonctionnement du différentiel est donc un fonctionnement normal.

Si maintenant le couple résistant appliqué à l'arbre de sortie 6a diminue, les tiges 14 redescendent les rampes des rainures 16 pour se retrouver au fond de ces rainures comme représenté à la figure 2b. L'arbre 20 est ainsi repoussé vers la droite des figures 1 et 2 par les rondelles 24 de sorte que les canelures 22 viennent s'engager dans les canelures 23, solidarisant donc les arbres 20, 21. Le différentiel est ainsi bloqué.

La figure 2a représente le cas symétrique dans lequel le couple résistant appliqué à l'arbre de sortie 7a diminue, ce qui permet un déplacement vers la gauche de l'arbre 21 et un blocage dans les mêmes conditions du différentiel.

Aussi bien dans le présent mode de réalisation que dans celui décrit ci-après, la solidarisation est effectuée entre les deux sorties. On sait cependant que le blocage d'un différentiel peut être également obtenu en solidarisant l'entrée et une sortie. Ceci pourrait être obtenu dans le cas présent en remplaçant les canelures 22 et 23 des arbres 20 et 21 par des crabots formés aux extrémités axialement intérieures des prolongements 18 et 19, de part et d'autre des rainures 16 et 17, et agencés pour s'engager dans des évidements correspondants formés dans le porte-satellites 3.

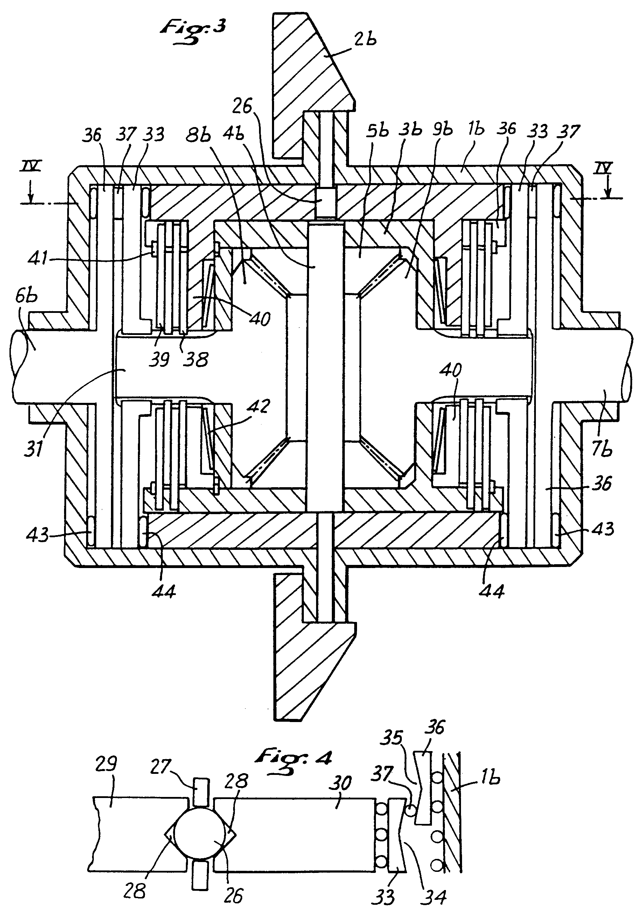

On reviendra maintenant au deuxième mode de réalisation des figures 3 et 4 dont la description a été entamée ci-dessus pour ses parties communes avec le premier mode de réalisation.

Le porte-satellites 3b est entraîné en rotation à partir du boitier 1b par l'intermédiaire de tiges radiales 26, solidaires des extrémités des axes porte-satellites 4 b et intercalées avec des doigts d'entraînement 27 solidaires du boîtier 1b.

Les tiges 26 sont par ailleurs engagées dans des rainures radiales 28 à section transversale en V formées dans deux organes de pression 29 et 30 disposés entre le boîtier 1b et le porte-satellites 3b. Les rainures 28 sont ouvertes face à face et enserrent par conséquent le doigt 26.

Chaque axe 31, 32 des pignons planétaires, solidaire de ce pignon, est canelé extérieurement et entraîne en rotation par ces canelures un plateau 33 formant des rainures radiales 34 ouvertes axialement vers l'extérieur en vis-à-vis de rainures radiales 35 formées dans un plateau 36 solidaire en rotation de l'un des arbres de sortie 6b et 7b. Des tiges radiales 37 sont engagées entre les plateaux 33 et 36 dans les rainures en vis-à-vis 34 et 35.

Les canelures de chaque axe 31 et 32 reçoivent par ailleurs un premier ensemble de disques de friction 38 intercalé avec un deuxième ensemble de disques de friction 39 montés dans des encoches du porte-satellites 3b. Les disques 38 sont par conséquent solidaires en rotation des pignons planétaires 8b et 9b, alors que les disques 39 sont solidaires en rotation du porte-satellites 3b.

Les disques 38 et 39 sont bloqués axialement, d'une part vers le plan de symétrie par un plateau 40 solidaire d'un des organes de pression 29, 30, et d'autre part du côté opposé par un circlip 41 solidaire axialement du porte-satellites 3b.

Des rondelles Belleville 42 sont montées entre le porte-satellites 3b et les plateaux 40 de manière à tendre à écarter les organes de pression 29 et 30 axialement vers l'extérieur, de manière à exercer une précontrainte sur les disques 38 et 39.

Enfin, des butées à aiguille 43 et 44 sont disposées entre les flasques latéraux du boîtier 1b et les plateaux 36 et, respectivement, entre les plateaux 33 et les organes de pression 29 et 30.

La figure 4 illustre le fonctionnement normal de ce différentiel.

Si l'on considère à titre d'exemple le côté droit de la figure 3, le couple résistant appliqué dans cet état de fonctionnement au plateau 36 par l'intermédiaire de l'arbre de sortie 7b et s'oppose au couple d'entrée transmis au plateau 33 par l'intermédiaire de l'arbre 32 du pignon planétaire 9b. Il s'ensuit un glissement relatif en rotation des plateaux 33 et 36, les tiges 37 montant sur les rampes opposées formées par les flancs des rainures 34 et 35.

Les organes de pression 30 sont donc repoussés vers le plan de symétrie du différentiel, les tiges 26 ne pouvant de ce fait monter les rampes formées par les flancs des rainures 28.

Si le couple résistant appliqué à l'arbre de sortie 17b diminue, les tiges 37 vont avoir tendance à redescendre au fond des rainures 34 et 35, permettant alors un déplacement axial vers l'extérieur des organes de pression 30. Ce déplacement axial sera provoqué d'une part par la précontrainte appliquée par les rondelles Belleville 42, et d'autre part, par la force d'appui des tiges 26 sur le flanc arrière de la rainure 28 correspondante.

Ce déplacement axial des organes de pression 30 entraîne une compression des disques d'embrayage entre le plateau 40 et le circlip 41, d'où une solidarisation progressive des deux pignons planétaires 8b et 9b et par conséquent, des arbres de sortie 6b et 7b.

On notera que le mode de réalisation représenté aux dessins présente l'avantage de permettre une dissymétrie entre les organes de pression 29 et 30, la tige 26 pouvant demeurer au fond de la rainure 28 correspondant à l'un de ces organes tout en montant le long d'un des flancs de la rainure de l'autre organe.

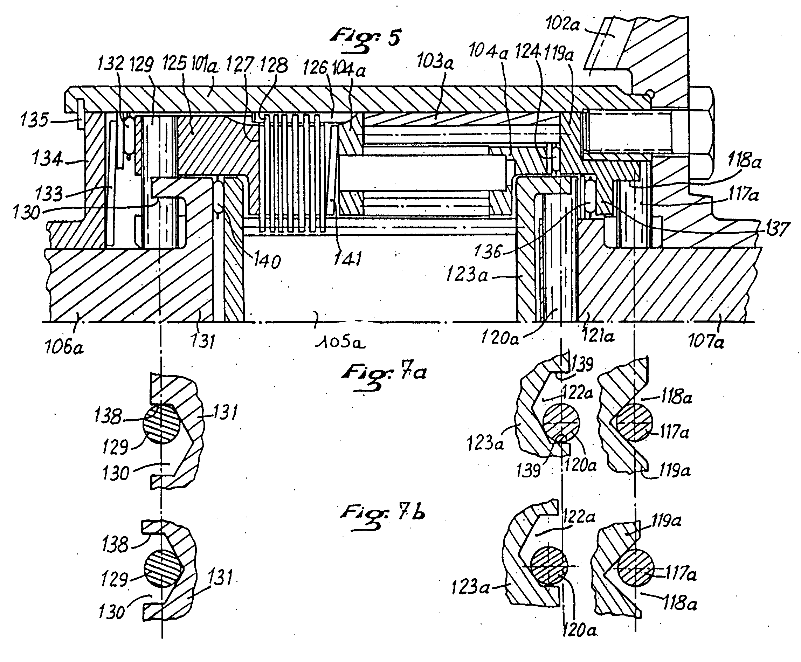

On se référera maintenant aux figures 5 à 10.

Les éléments communs aux troisième et quatrième modes de réalisation ont reçu les mêmes chiffres de référence, assortis de la lettre a pour le troisième mode de réalisation et de la lettre b pour le quatrième.

Ces deux différentiels à trains épicycloïdaux comportent de façon connue un boîtier 101a, 101b solidaire d'un pignon conique d'entrée 102a (non représenté à la figure 8), une couronne 103a, 103b, un porte-satellites 104a, 104b, un pignon planétaire 105a, 105b et deux arbres de sortie 106a, 106b et 107a, 107b respectivement.

Le mode de réalisation des figures 5 et 6 correspond à un différentiel où l'entrée de couple se fait par la couronne, et où la première sortie s'effectue par le porte-satellites et la deuxième sortie par le pignon planétaire.

Dans ce cas, le porte-satellites 104a supporte un certain nombre de paires de satellites 108, 108′ engrenant entre eux, les satellites 108 possédant des dents 109 pour engrener avec des dents 110 du pignon planétaire et les satellites 108′ possédant des dents 111 pour engrener avec des dents 112 de la couronne.

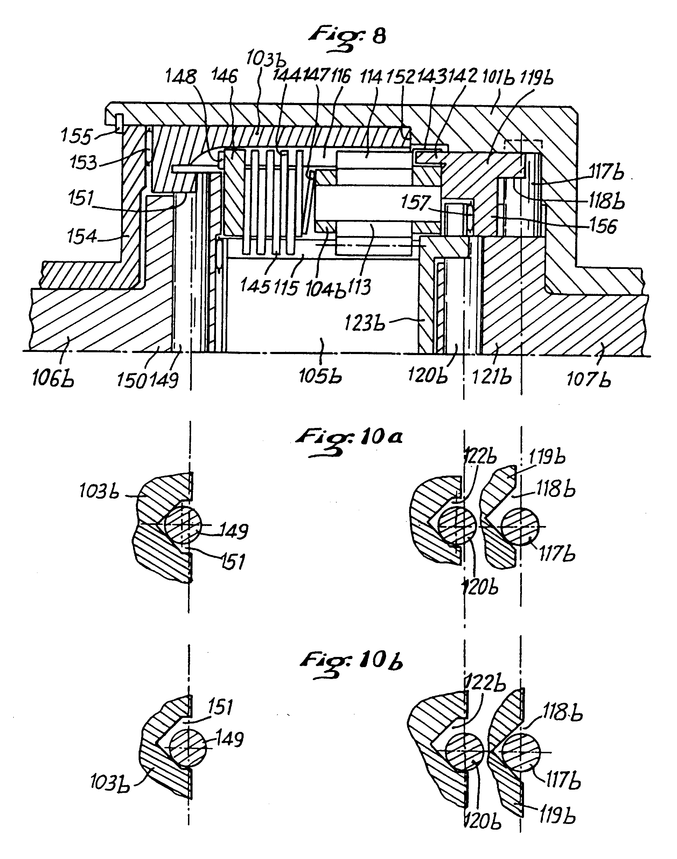

Par contre, les figures 8 et 9 représentent un différentiel donc l'entrée de couple s'effectue par le porte-satellites 104b, et où la première sortie s'effectue par la couronne 103b et la deuxième sortie par le pignon planétaire 105b.

Dans ce cas, le porte-satellites 104b supporte un ensemble de satellites 113 muni de dents 114 pour engrener simultanément avec des dents 115 du pignon planétaire et des dents 116 de la couronne.

Dans les deux cas, des tiges 117a, 117b sont montées radialement dans le boîtier 101a, 101b, fixes par rapport à celui-ci.

Ces tiges 117a, 117b sont engagées dans des rainures radiales 118a, 118b à section en V formées dans un organe de pression 119a, 119b. Cet organe 119a, 119b est monté mobile à la fois en rotation et axialement dans le boîtier correspondant.

Par ailleurs, un deuxième ensemble de tiges radiales 120a, 120b est monté dans une extrémité 121a, 121b de l'arbre de sortie 107a, 107b, fixe par rapport à cet arbre.

Les tiges 120a, 120b sont engagées dans des rainures radiales 122a, 122b à section en V, formées dans une partie d'extrémité 123a, 123b du pignon planétaire 105a, 105b.

On se référera maintenant plus particulièrement au premier mode de réalisation des figures 5 et 6.

L'organe de pression 119a est solidaire de la couronne 103a.

Il est par ailleurs en appui axial sur le porte-satellites 104a par l'intermédiaire d'un roulement à aiguille 124.

Un organe de contre-pression 125 est solidaire en rotation du porte-satellites 104a par l'intermédiaire de canelures 126 permettant un déplacement axial relatif de ces deux pièces.

Par ailleurs, deux ensembles de disques de friction 127 et 128 sont disposés entre le porte-satellites 104a et l'organe de contre-pression 125.

Les disques 127 sont solidaires en rotation du pignon planétaire 105a et les disques 128 sont solidaires en rotation de l'ensemble constitué par la couronne 103a et l'organe de contre-pression 125, ces deux ensembles de disques étant intercalés.

L'organe de contre-pression 125 porte également des tiges radiales 129 engagées dans des rainures radiales 130 à section en V formées dans les extrémités 131 de l'arbre de sortie 106a.

Un roulement à aiguille 132 est disposé entre l'organe de contre-pression 125 et une rondelle Belleville 133 maintenue axialement vers l'extérieur par un couvercle 134 fixé au boîtier 101a par un circlip 135.

Enfin, un roulement à aiguille 136 est disposé entre un épaulement annulaire 137 de l'organe de pression 119a et les tiges radiales 120a.

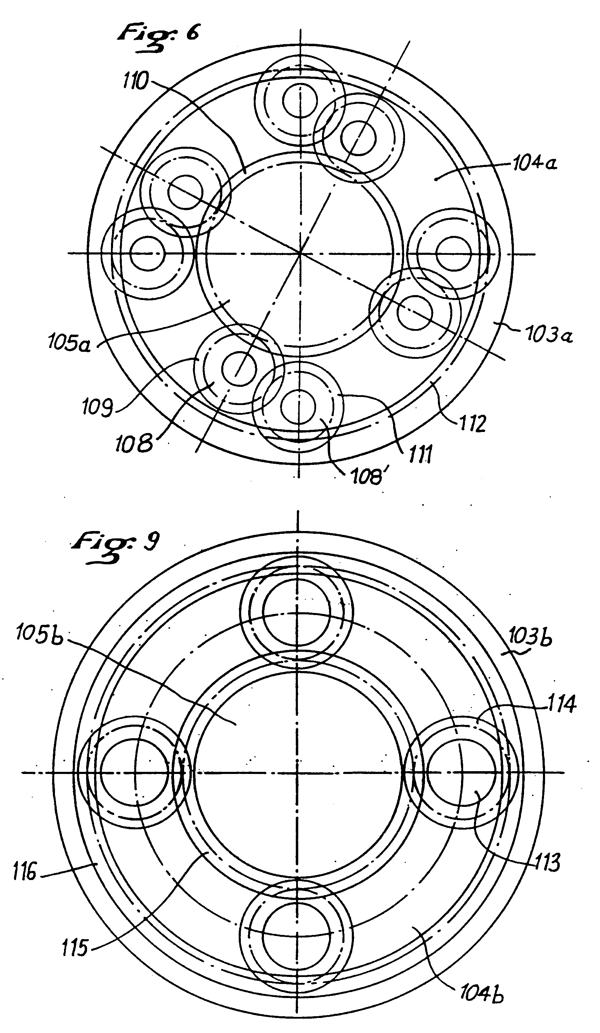

Comme montré sur les figures 7a, 7b, les rainures radiales 118a et 122a sont ouvertes axialement du même côté, vers la droite des figures, la rainure 130 étant ouverte de l'autre côté.

On rappelle que l'entrée du couple s'effectue par l'intermédiaire du pignon conique 102a, du boîtier 101a, et des tiges 117a. Ces tiges étant engagées dans les rainures 118a, le couple est transmis à l'organe de pression 119a solidaire de la couronne 103a, de sorte que l'entrée de couple dans le différentiel s'effectue par cette couronne.

De la couronne 103a, une partie du couple est tout d'abord transmise au porte-satellites 104a puis, par l'intermédiaire des canelures 126, à l'organe de contre-pression 125 et aux tiges 129 qui, étant engagées dans les rainures 130, transmettent ce couple à l'arbre de sortie 106a.

L'autre partie du couple d'entrée est transmise, par l'intermédiaire des satellites 108, 108′, au pignon planétaire 105a qui, par l'intermédiaire de ses rainures 122a transmet cette autre partie du couple aux tiges 120a et par conséquent à l'arbre de sortie 107a.

La figure 7a représente le différentiel en fonctionnement normal.

Dans cet état de fonctionnement, les couples résistants sur les axes 106a et 107a produisent un glissement des tiges 129 et 120a le long des rampes formées par les rainures 130 et 122a respectivement. Des butées 138 et 139 respectivement formées à la suite des rampes limitent ce glissement.

Dans cette position, les tiges 129 imposent à l'arbre de sortie 106a de se trouver dans sa position extrême vers la droite de la figure 5. Cet arbre étant en butée avec le pignon planétaire 105a par l'intermédiaire d'une butée à aiguille 140, celui-ci est également repoussé vers la droite de même que des tiges 120a et par conséquent l'arbre de sortie 107a.

Du fait de la butée 136, la pièce de pression 119a est également poussée vers la droite, de sorte que des tiges 117a se trouvent maintenues au fond des rainures 118a de la pièce de pression 119a.

Si maintenant le couple résistant appliqué à l'arbre de sortie 106a diminue brutalement, les tiges 129 redescendent les rampes des rainures 130 pour se retrouver au fond de ces rainures comme représenté à la figure 7b. L'arbre 106a, le pignon planétaire 105a et l'arbre de sortie 107a peuvent ainsi se déplacer vers la gauche de la figure 5, permettant ainsi au couple d'entrée appliqué aux tiges 117a de faire monter ces tiges le long des rampes des rainures 118a en déplaçant l'organe de pression 119a vers la gauche. Ceci a pour effet, par l'intermédiaire de la butée 124 et du porte-satellite 104a, de venir comprimer les disques d'embrayage 127 et 128 contre l'organe de contre-pression 125 et par conséquent, de solidariser les arbres de sortie 106a et 107a par l'intermédiaire des rainures 130, des tiges 129, de l'organe de contre-pression 125, des disques 127 et 128, du pignon planétaire 105a, des rainures 121a et des tiges 120a.

On notera que les butées 139 ont pour effet d'annuler l'effort axial exercé par les tiges 120a sur le pignon planétaire 105a, effort qui, dans le cas contraire, pourrait devenir supérieur à l'effort exercé au niveau de l'entrée et empêcher par conséquent le fonctionnement décrit ci-dessus.

Bien entendu, cette solidarisation est progressive en fonction du couple résistant appliqué à l'arbre de sortie 106a. Une pré-charge peut en outre être appliquée par la rondelle Belleville 133 ainsi qu'éventuellement par une autre rondelle Belleville 141 disposée entre l'empilage de disques 127, 128 et le porte-satellites 104a.

Dans le cas non représenté aux dessins où il s'agit du couple résistant appliqué à l'arbre de sortie 107a qui diminue, le même phénomène se produit, à savoir, que les tiges 120 peuvent redescendre les rampes des rainures 122a et ainsi permettre un déplacement vers la gauche de l'arbre de sortie 107a. Il en résulte que la butée 136 s'efface, permettant un déplacement vers la gauche de l'organe de poussée 119a sous l'effet du couple appliqué par les tiges 117a qui montent les rampes des rainures 118a, ce qui a également pour effet d'actionner l'embrayage constitué par les disques de friction 127 et 128.

Aussi bien dans le présent mode de réalisation que dans celui décrit ci-après, la solidarisation est effectuée entre les deux sorties. On sait cependant que le blocage d'un différentiel peut également être obtenu en solidarisant l'entrée et une sortie.

Ceci pourrait être obtenu sans difficulté dans le cas présent en intervertissant axialement l'embrayage et le porte-satellites et en solidarisant en rotation les disques 128 avec la couronne 103a et non pas avec l'organe de contre-pression 125.

On reviendra maintenant au deuxième mode de réalisation des figures 8 et 9 dont la description a été entamée ci-dessus pour ses parties communes avec le premier mode de réalisation.

L'organe de pression 119b est rendu solidaire en rotation du porte-satellites 104b par l'intermédiaire de doigts 142, coopérant avec des canelures 143 de ce porte-satellites.

Deux ensembles de disques de friction 144 et 145 sont disposés entre un disque de butée 146 et une rondelle Belleville 147. La rondelle Belleville 147 est en appui contre le porte-satellites 104b et le disque de butée 146 est maintenu sur la couronne 103b par un circlip 148.

Des tiges radiales 149 sont montées fixes dans l'extrémité 150 de l'arbre 106b et sont engagées dans des rainures radiales 151 à section en V de la couronne 103b.

Cette couronne 103b est maintenue fixe axialement par rapport au boîtier 101b d'une part par un épaulement 152 de ce boîtier et d'autre part, par une butée à aiguille 153 en appui sur un couvercle 154 fixé au boîtier par un circlip 155.

L'organe de pression 119b forme par ailleurs un épaulement 156 se trouvant en appui sur l'extrémité 123b du pignon planétaire 105b par l'intermédiaire d'un autre roulement à aiguille 157.

Dans le présent mode de réalisation, les rainures 118b, 122b et 151 sont toutes ouvertes axialement du même côté du différentiel, à savoir, du côté droit de la figure 8.

Le fonctionnement normal de ce différentiel est représenté à la figure 10b et est analogue à celui de la figure 7a. Le couple d'entrée est appliqué comme précédemment au boîtier 101b et aux tiges 117b qui, par l'intermédiaire des rainures 118b, transmettent ce couple à l'organe de pression 119b.

Cet organe 119b transmet alors le couple d'entrée au porte-satellites 104b par l'intermédiaire des ergots 142.

Une partie de ce couple est alors d'une part appliquée à la couronne 103b par l'intermédiaire des canelures 116, puis par l'intermédiaire des rainures 151 aux tiges 149 et à l'arbre de sortie 106b.

Le couple d'entrée est également appliqué par l'intermédiaire des satellites 113 au pignon planétaire 105b et, par l'intermédiaire des rainures 122b, aux tiges 120b et à l'arbre de sortie 107b.

Dans le cas d'une chute du couple résistant appliqué à l'arbre de sortie 106b, les tiges 149 redescendent au fond des rainures 151, autorisant ainsi l'ensemble constitué par l'arbre 106b, le pignon planétaire105b et l'arbre 107b de se déplacer vers la gauche de la figure 8, ce qui a pour effet d'effacer la butée 157 et de permettre un déplacement vers la gauche de l'organe de pression 119b sous l'effet du couple d'entrée appliqué par les tiges 117b qui remontent l'une des rampes formée par les rainures 118b.

L'organe de pression 119b se trouvant en appui contre le porte-satellites 104b, ce dernier se déplace également vers la gauche, comprimant, par l'intermédiaire de la rondelle Belleville 147, les disques d'embrayage 144 et 145.

Les arbres de sortie 106b et 107b se trouvent ainsi solidarisés par l'intermédiaire des tiges 149, de la couronne 103b, des disques 144 et 145, du pignon planétaire 105b, et des tiges 120b.

Dans le cas où il s'agit du couple résistant appliqué à l'arbre de sortie 107b qui diminue, les tiges 120b redescendent au fond des rainures 122b effaçant ainsi la butée 157, et permettant également le déplacement vers la gauche de la figure 8 de l'organe de pression 119b de manière que, là encore, les arbres de sortie 106b et 107b sont solidarisés par l'intermédiaire de l'embrayage constitué par les disques 144 et 145.

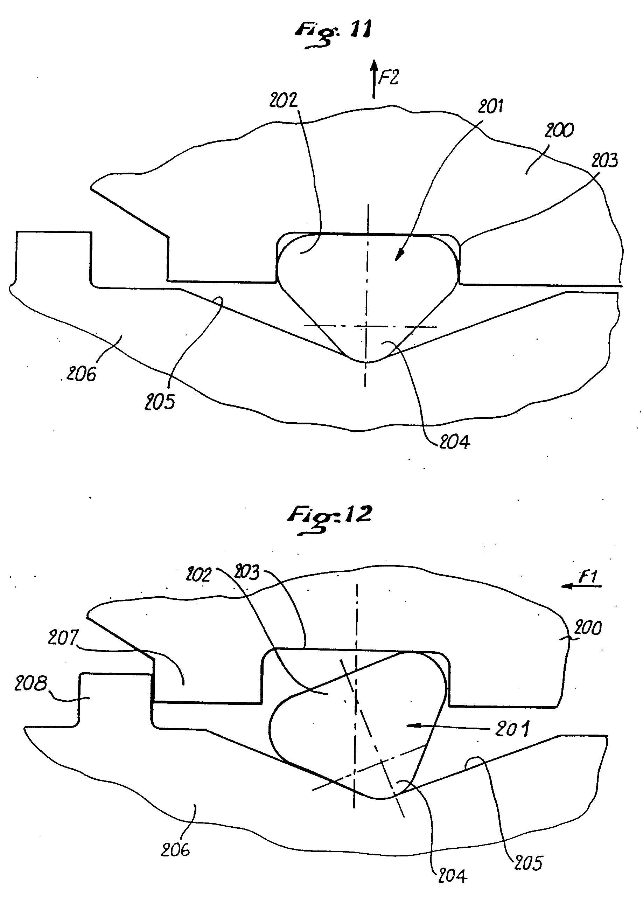

Les figures 11 et 12 représentent une alternative aux systèmes à tiges décrits ci-dessus dans lesquels on trouve un organe solidaire d'une tige engagée dans une nervure formée dans un autre organe, l'un de ces organes étant moteur et l'autre organe étant entraîné, la réaction de la tige sur les flancs de la nervure provoquant un effort axial utilisé pour assurer le fonctionnement du dispositif.

Selon cette variante, la tige qui était solidaire d'un organe 200 est remplacée par une came 201 de forme sensiblement triangulaire, dans ce cas particulier isocèle, dont la base 202 est engagée dans un embrèvement 203 de l'organe 200, et dont le sommet 204 opposé à la base 202 est engagé au fond de la rainure 205 de l'organe en vis-à-vis 206.

Si l'on suppose que l'organe menant est l'organe 200 et qu'il tourne dans le sens indiqué par la flèche F1, l'ensemble adoptera la configuration de la figure 12 dans laquelle la came 201 a basculé, dans la mesure où le couple résistant appliqué à l'organe 206 est suffisant.

Deux butées coopérantes 207 et 208 peuvent être prévues sur les organes 200 et 206 respectivement pour limiter le glissement relatif de ces organes.

Dans cette position les pièces 200 et 206 sont écartées.

Si par contre cet écartement est contrarié, on récupère un effort axial dans le sens de la flèche F2 comme représenté à la figure 11.

On comprend par conséquent qu'un tel agencement peut remplacer l'un quelconque des agencements à tiges et rainures décrits ci-dessus.

## Revendications

1. Différentiel autobloquant comprenant un organe d'entrée (3a; 3b; 103a; 104b), deux organes de sortie (8a, 9a; 8b, 9b; 105a, 104a, 125; 105b 103b ), deux arbres de sortie associés chacun à l'un des organes de sortie, et des moyens de solidarisation (22, 23 ; 29, 30, 38, 39 ; 127, 128 ; 144, 145) mobiles axialement pour solidariser par leur déplacement axial deux des trois organes d'entrée et de sortie, caractérisé par le fait qu'il comprend des moyens de blocage (14, 16 ; 33, 35, 37 ; 120a, 122a; 120b, 122b), pour s'opposer audit déplacement axial des moyens de solidarisation tant que le couple résistant sur chaque arbre de sortie conserve une valeur suffisante par rapport au couple d'entrée.

2. Différentiel à pignons coniques selon la revendication 1, dans lequel l'organe d'entrée est constitué d'un porte-satellites et les deux organes de sortie sont constitués de deux pignons planétaires, caractérisé par le fait que les moyens de blocage sont constitués par les pignons qui, par leurs réaction de denture, s'opposent aux moyens de solidarisation.

3. Différentiel à pignons coniques selon la revendication 1, dans lequel l'organe d'entrée est constitué d'un porte-satellites (3a ; 3b) et les deux organes de sorties sont constitués par deux pignons planétaires (8a, 9a ; 8b , 9b), caractérisé par le fait que les moyens de blocage sont disposés entre au moins l'un des pignons planétaires et l'arbre de sortie qui lui est associé.

4. Différentiel selon la revendication 3, caractérisé par le fait que lesdits moyens de blocage comprennent au moins une première tige radiale (14) engagée dans une première rainure radiale (16 ; 34, 35) à section transversale en V, ladite première tige radiale étant entraînée en rotation par l'un des éléments constitués par le pignon planétaire et par l'arbre de sortie (6a; 7a), et la première rainure radiale étant formée dans un organe (18 ; 33) entraîné en rotation par l'autre de ces éléments, le couple résistant étant transmis de l'arbre de sortie au pignon planétaire par la force d'appui de ladite première tige radiale sur l'un des flancs de ladite première rainure, et le mouvement axial relatif de la première tige et de la première rainure radiale s'opposant au déplacement axial des moyens de solidarisation.

5. Différentiel selon la revendication 4, caractérisé par le fait que ladite première tige radiale est engagée dans deux premières rainures radiales (34, 35) dont les ouvertures se font face, l'une de ces rainures étant formée dans un organe (33) solidaire en rotation du pignon.

6. Différentiel selon l'une quelconque des revendications 3 à 5, caractérisé par le fait que lesdits moyens de solidarisation comprennent un embrayage à deux ensembles de disques (38, 39) intercalés, les disques d'un ensemble étant solidaires en rotation de l'un des organes à solidariser, et les disques de l'autre ensemble étant solidaires en rotation de l'autre organe à solidariser, ledit déplacement axial provoquant une friction d'un des ensembles de disques sur l'autre.

7. Différentiel selon l'une quelconque des revendications 3 à 6, caractérisé par le fait que lesdits moyens de solidarisation comprennent un ensemble de crabots (22, 23).

8. Différentiel selon la revendication 7, caractérisé par le fait que ledit ensemble de crabots comprend les extrémités en vis-à-vis des arbres (20, 21) des pignons planétaires, l'un des arbres étant canelé intérieurement et l'autre arbre étant canelé extérieurement.

9. Différentiel selon l'une quelconque des revendications 3 à 8, caractérisé par le fait qu'il comprend des moyens élastiques (24, 25) tendant à amener les moyens de solidarisation en position axiale de solidarisation, lesdits moyens de blocage agissant à l'encontre desdits moyens élastiques.

10. Différentiel selon l'une quelconque des revendications 3 à 8, caractérisé par le fait qu'il comprend au moins une deuxième tige radiale (26) engagée dans une deuxième rainure radiale (28), ladite deuxième tige radiale étant solidaire en rotation de l'un des éléments constitués par l'organe d'entrée et par les moyens de solidarisation, et la deuxième rainure radiale étant formée dans l'autre de ces éléments, ledit déplacement axial étant provoqué par la force d'appui de la deuxième tige sur l'un des flancs de la deuxième rainure.

11. Différentiel selon la revendication 10, caractérisé par le fait que le couple d'entrée est transmis du boîtier du différentiel à l'organe d'entrée par l'intermédiaire de ladite deuxième tige.

12. Différentiel à train épicycloïdal selon la revendication 1, caractérisé par le fait que les moyens de solidarisation agissent par déplacement axial de l'organe d'entrée.

13. Différentiel selon la revendication 12, caractérisé par le fait que lesdits moyens de blocage comprennent au moins une troisième tige radiale (120a ; 120b), engagée dans une troisième rainure radiale à section en V (122a ; 122b) la troisième tige étant solidaire en rotation de l'un des éléments constitués par l'arbre de sortie correspondant à l'un des organes de sortie et par cet organe de sortie lui-même, et la troisième rainure étant formée dans l'autre de ces éléments, le couple résistant correspondant étant appliqué à l'organe de sortie par l'intermédiaire de la force d'appui exercée par la troisième tige sur l'un des flancs de la troisième rainure.

14. Différentiel selon la revendication 13, caractérisé par le fait que ladite troisième tige radiale (120a ; 120b) est montée solidaire en rotation de l'arbre de sortie (107a ; 107b) correspondant au pignon planétaire (105a ; 105b), et que la troisième rainure radiale (122a ; 122b) est formée dans ledit pignon planétaire.

15. Différentiel selon l'une quelconque des revendications 12 à 14 caractérisé par le fait que l'organe d'entrée comprend la couronne (103a) du train épicycloïdal et que le deuxième organe de sortie comprend le porte-satellites (104a) du train épicycloïdal, au moins une quatrième tige (129) étant montée solidaire en rotation du porte-satellites, et engagée dans une quatrième rainure radiale à section en V (130) formée dans un organe solidaire de l'arbre de sortie (106a) correspondant au porte-satellites, le couple résistant étant transmis dudit arbre de sortie au porte-satellites par l'intermédiaire de ladite quatrième tige.

16. Différentiel selon la revendication 15, caractérisé par le fait que ladite quatrième tige radiale est montée dans un organe de contre-pression (125) solidaire en rotation du porte-satellites, lesdits moyens de solidarisation étant montés entre la couronne et ledit organe de contre-pression.

17. Différentiel selon l'une quelconque des revendications 15 et 16, caractérisé par le fait que le pignon planétaire et ledit organe solidaire de l'arbre de sortie sont montés en butée l'un contre l'autre et sont disposés de façon coulissante axialement par rapport au boîtier du différentiel.

18. Différentiel selon l'une quelconque des revendications 12 à 14, caractérisé par le fait que l'organe d'entrée comprend le porte-satellites (104b) du train épicycloïdal et que le deuxième organe de sortie comprend la couronne (103b) du train épicycloïdal, au moins une cinquième tige radiale (149) étant montée solidaire en rotation de l'arbre de sortie (106b) correspondant à la couronne, et engagée dans une cinquième rainure radiale à section en V (151) formée dans la couronne, le couple résistant étant transmis dudit arbre de sortie à la couronne par l'intermédiaire de ladite cinquième tige.

19. Différentiel selon la revendication 18, caractérisé par le fait que ladite couronne est montée fixe axialement par rapport au boîtier du différentiel, et que lesdits moyens de solidarisation sont disposés entre ladite couronne et le planétaire.

20. Différentiel selon l'une quelconque des revendications 18 et 19, caractérisé par le fait que ladite cinquième tige est montée dans un organe (150) solidaire dudit arbre de sortie, cet organe et le pignon planétaire étant en appui l'un contre l'autre et disposés de façon coulissante par rapport au boîtier du différentiel.

21. Différentiel selon l'une quelconque des revendications 12 à 20, caractérisé par le fait qu'il comprend des moyens élastiques de pré-charges (133, 141 ; 147) pour les moyens de solidarisation.

22. Différentiel selon l'une quelconque des revendications 4,10,13,15 et 18, caractérisé par le fait que ladite première, deuxième, troisième, quatrième ou cinquième tige respectivement, est remplacée par une came (201) engagée au fond de la rainure (205) et dans un embrèvement (203) formé dans l'organe (200) qui portait la tige.

23. Différentiel selon la revendication 22, caractérisé par le fait que la came a une section sensiblement triangulaire, un de ses sommets (204) étant engagé dans la rainure et sa base opposée (202) étant engagée dans l'embrèvement.

24. Différentiel selon l'une quelconque des revendications 22 et 23, caractérisé par le fait que l'organe (206) dans lequel est formée la rainure et l'organe dans lequel est formé l'embrèvement comportent des butées (207, 208) pour limiter leur glissement angulaire relatif.

## Claims

1. Self-locking differential comprising an input member (3a; 3b; 103a; 104b), two output members (8a, 9a; 8b, 9b; 105a, 104a, 125; 105b, 103b), two output shafts each associated with one of the output members, and interlocking means (22, 23; 29, 30, 38, 39; 127, 128; 144, 145), which are axially movable for interlocking by their axial movement two of the three input and output members, characterised by the fact that it comprises locking means (14, 16; 33, 35, 37; 120a, 122a; 120b, 122b), for opposing said axial displacement of the interlocking means as long as the resistant torque on each output shaft maintains an adequate value with respect to the input torque.

2. Bevel-gear differential according to Claim 1, in which the input member is constituted by a planet carrier and the two output members are constituted by two planet wheels, characterised by the fact that the locking means are constituted by the wheels which, by their toothing reaction,oppose the interlocking means.

3. Bevel-gear differential according to Claim 1, in which the input member is constituted by a planet carrier (3a; 3b) and the two output members are constituted by two planet wheels (8a, 9a; 8b, 9b), characterised by the fact that the locking means are disposed between at least one of the planet wheels and the output shaft which is associated therewith.

4. Differential according to Claim 3, characterised by the fact that said locking means comprise at least one first radial rod (14) engaged in a first radial groove (16; 34, 35) having a V-shaped cross-section, said first radial rod being set in rotation by one of the members constituted by the planet wheel and by the output shaft (6a; 7a), and the first radial groove being formed in a member (18; 33) set in rotation by the other of these members, the resistant torque being transmitted from the output shaft to the planet wheel by the bearing force of said first radial rod on one of the sides of said first groove and the relative axial movement of the first rod and of the first radial groove opposing the axial displacement of the interlocking means.

5. Differential according to Claim 4, characterised by the fact that said first radial rod is engaged in two first radial grooves (34, 35) whereof the openings are in facing relationship, one of these grooves being formed in a member (33) integral in rotation with the wheel.

6. Differential according to one of Claims 3 to 5, characterised by the fact that said interlocking means comprise a clutch having two sets of interposed discs (38; 39), the discs of one set being integral in rotation with one of the members to be interlocked and the discs of the other set being integral in rotation with the other member to be interlocked, said axial displacement causing friction of one of the sets of discs on the other.

7. Differential according to one of Claims 3 to 6, characterised by the fact that said interlocking means comprise a set of dogs (22, 23).

8. Differential according to Claim 7, characterised by the fact that said set of dogs comprises the opposing ends of the shafts (20, 21) of the planet wheels, one of the shafts being splined internally and the other shaft being splined externally.

9. Differential according to one of Claims 3 to 8, characterised by the fact that it comprises spring means (24, 25) tending to bring the interlocking means into the axial interlocking position, said locking means acting in opposition to said spring means.

10. Differential according to one of Claims 3 to 8, characterised by the fact that it comprises at least one second radial rod (26) engaged in a second radial groove (28), said second radial rod being integral in rotation with one of the members constituted by the input member and by the interlocking means, and the second radial groove being formed in the other of these members, said axial displacement being caused by the bearing force of the second rod on one of the sides of the second groove.

11. Differential according to Claim 10, characterised by the fact that the input torque is transmitted from the casing of the differential to the input member through the intermediary of said second rod.

12. Differential having an epicyclic gear-train according to Claim 1, characterised by the fact that the interlocking means act by the axial displacement of the input member.

13. Differential according to Claim 12, characterised by the fact that said locking means comprise at least one third radial rod (120a; 120b), engaged in a third radial groove having a V-shaped cross-section (122a; 122b), the third rod being integral in rotation with one of the members constituted by the output shaft corresponding to one of the output members and by this output member itself, and the third groove being formed in the other of these members, the corresponding resistant torque being applied to the output member through the intermediary of the bearing force exerted by the third rod on one of the sides of the third groove.

14. Differential according to Claim 13, characterised by the fact that said third radial rod (120a; 120b) is mounted to be integral in rotation with the output shaft (107a; 107b) corresponding to the planet wheel (105a; 105b), and that the third radial groove (122a; 122b) is formed in said planet wheel.

15. Differential according to one of Claims 12 to 14, characterised by the fact that the input member comprises the annulus (103a) of the epicyclic gear-train and that the second output member comprises the planet carrier (104a) of the epicyclic gear-train, at least one fourth rod (129) being mounted to be integral in rotation with the planet carrier and engaged in a fourth radial groove having a V-shaped cross-section (130) formed in a member integral with the output shaft (106a) corresponding to the planet carrier, the resistant torque being transmitted from said output shaft to the planet carrier through the intermediary of said fourth rod.

16. Differential according to Claim 15, characterised by the fact that said fourth radial rod is mounted in a counter-pressure member (125) integral in rotation with the planet carrier, said interlocking means being mounted between the annulus and said counter-pressure member.

17. Differential according to one of Claims 15 and 16, characterised by the fact that the planet wheel and said member integral with the output shaft are mounted in abutment one against the other and are disposed so that they slide axially with respect to the casing of the differential.

18. Differential according to one of Claims 12 to 14, characterised by the fact that the input member comprises the planet carrier (104b) of the epicyclic gear-train and that the second output member comprises the annulus (103b) of the epicyclic gear-train, at least one fifth radial rod (149) being mounted to be integral in rotation with the output shaft (106b) corresponding to the annulus, and engaged in a fifth radial groove having a V-shaped cross-section (151) formed in the annulus, the resistant torque being transmitted from said output shaft to the annulus through the intermediary of said fifth rod.

19. Differential according to Claim 18, characterised by the fact that said annulus is mounted to be fixed axially with respect to the casing of the differential and that said interlocking means are disposed between said annulus and the planets.

20. Differential according to one of Claims 18 and 19, characterised by the fact that said fifth rod is mounted in a member (150) integral with said output shaft, this member and the planet wheel bearing one against the other and being disposed so that they are able to slide with respect to the casing of the differential.

21. Differential according to one of Claims 12 to 20, characterised by the fact that it comprises pre-loaded spring means (133, 141; 147) for the interlocking means.

22. Differential according to one of Claims 4, 10, 13, 15 and 18, characterised by the fact that said first, second, third, fourth or fifth rod respectively, is replaced by a cam (201) engaged at the bottom of the groove (205) and in a recess (203) formed in the member (200) which supports the rod.

23. Differential according to Claim 22, characterised by the fact that the cam has a substantially triangular section, one of its vertices (204) being engaged in the groove and its opposite base (202) being engaged in the recess.

24. Differential according to one of Claims 22 and 23, characterised by the fact that the member (206) in which the groove is formed and the member in which the recess is formed comprise abutments (207, 208) for limiting their relative angular slipping.

## Patentansprüche

1. Selbstsperrendes Differential mit einem Antriebsorgan (3a; 3b; 103a; 104b), zwei Abtriebsorganen (8a, 9a; 8b, 9b; 105a, 104a, 125; 105b, 103b), zwei Abtriebswellen, die jeweils mit einem der Abtriebsorgane assoziiert sind, und axial beweglichen Verbindungsmitteln (22, 23; 29, 30, 38, 39; 127, 128; 144, 145), die dazu dienen, durch ihre axiale Verschiebung zwei der drei Antriebs- und Abtriebsorgane miteinander zu verbinden, dadurch gekennzeichnet, daß es Mittel zur Sperrung (14, 16; 33, 35, 37; 120a, 122a, 122b) umfaßt, dafür vorgesehen, dieser axialen Verschiebung der Verbindungsmittel entgegenzuwirken, solange das Reibungsmoment auf jeder Abtriebswelle einen in bezug auf das Eingangsdrehmoment ausreichenden Wert behält.

2. Kegelraddifferential nach Anspruch 1, bei dem das Antriebsorgan aus einem Planetenradträger besteht und die zwei Abtriebsorgane aus zwei Planetenrädern bestehen, dadurch gekennzeichnet, daß die Mittel zur Sperrung von den Rädern gebildet werden, die sich durch den Gegendruck ihrer Verzahnung den Verbindungsmitteln entgegensetzen.

3. Kegelraddifferential nach Anspruch 1, bei dem das Antriebsorgan aus einem Planetenradträger (3a; 3b) besteht und die zwei Abtriebsorgane aus zwei Planetenrädern (8a, 9a; 8b, 9b) bestehen, dadurch gekennzeichnet, daß die Mittel zur Sperrung zwischen mindestens einem der Planetenräder und der mit diesem Planetenrad assoziierten Abtriebswelle angeordnet sind.

4. Differential nach Anspruch 3, dadurch gekennzeichnet, daß die genannten Mittel zur Sperrung mindestens einen ersten radialen Stift (14) umfassen, der in eine erste radiale Nut (16; 34, 35) mit einem V-förmigen Querschnitt eingreift, wobei dieser erste radiale Stift von einem der von dem Planetenrad und der Abtriebswelle (6a; 7a) gebildeten Elemente zur Drehung angetrieben wird und die erste radiale Nut in einem Organ (18; 33) ausgebildet ist, das von dem anderen dieser Elemente zur Drehung angetrieben wird, wobei durch den auf einer der Flanken der radialen Nut herrschenden Auflagedruck dieses ersten radialen Stifts das Reibungsmoment von der Abtriebswelle auf das Planetenrad übertragen wird und die axiale Relativbewegung des ersten Stifts und der ersten radialen Nut der axialen Verschiebung der Verbindungsmittel entgegenwirkt.

5. Differential nach Anspruch 4, dadurch gekennzeichnet, daß der genannte erste radiale Stift in zwei erste radiale Nuten (34, 35) eingreift, deren Öffnungen sich gegenüberliegen, wobei eine dieser Nuten in einem Organ (33) ausgebildet ist, das mit dem Planetenrad drehfest verbunden ist.

6. Differential nach irgendeinem der Ansprüche 3 bis 5, dadurch gekennzeichnet, daß die Verbindungsmittel eine Kupplung mit zwei ineinandergeschobenen Gruppen von Scheiben (38, 39) umfassen, wobei die Scheiben der einen Gruppe drehfest mit dem einen der zu verbindenden Organe verbunden sind und die Scheiben der anderen Gruppe drehfest mit dem anderen zu verbindenden Organ verbunden sind, wobei die axiale Verschiebung eine Reibung einer der Scheibengruppen auf der jeweils anderen hervorruft.

7. Differential nach irgendeinem der Ansprüche 3 bis 6, dadurch gekennzeichnet, daß die Verbindungsmittel eine Gruppe von Schaltklauen (22, 23) umfassen.

8. Differential nach Anspruch 7, dadurch gekennzeichnet, daß diese Gruppe von Schaltklauen die einander gegenüberliegenden Enden der Wellen (20, 21) der Planetenräder umfaßt, wobei eine der Wellen innerlich gerillt und die andere Welle äußerlich gerippt ist.

9. Differential nach irgendeinem der Ansprüche 3 bis 8, dadurch gekennzeichnet, daß es elastische Mittel (24, 25) umfaßt, die dazu neigen, die Verbindungsmittel in die axiale Verbindungsstellung zu bringen, wobei die Mittel zur Sperrung diesen elastischen Mitteln entgegenwirken.

10. Differential nach irgendeinem der Ansprüche 3 bis 8, dadurch gekennzeichnet, daß es mindestens einen zweiten radialen Stift (26) umfaßt, der in eine zweite radiale Nut (28) eingreift, wobei dieser zweite radiale Stift drehfest mit einem der von dem Antriebsorgan und den Verbindungsmitteln gebildeten Elemente verbunden ist und die zweite radiale Nut in dem anderen dieser Elemente ausgebildet ist, wobei die besagte axiale Verschiebung durch den auf einer der Flanken der zweiten Nut herrschenden Auflagedruck des zweiten radialen Stifts bewirkt wird.

11. Differential nach Anspruch 10, dadurch gekennzeichnet, daß das Eingangsdrehmoment mittels dieses zweiten Stifts vom Gehäuse des Differentials auf das Antriebsorgan übertragen wird.

12. Differential mit Umlaufgetriebe nach Anspruch 1, dadurch gekennzeichnet, daß die Verbindungsmittel durch die axiale Verschiebung des Antriebsorganes wirken.

13. Differential nach Anspruch 12, dadurch gekennzeichnet, daß die Mittel zur Sperrung mindestens einen dritten radialen Stift (120a; 120b) umfassen, der in eine dritte radiale Nut mit einem V-förmigen Querschnitt (122a; 122b) eingreift, wobei der dritte Stift drehfest mit einem der Elemente verbunden ist, die von der einem der Abtriebsorgane entsprechenden Abtriebswelle und von diesem Abtriebsorgan selbst gebildet werden, und die dritte Nut in dem anderen dieser Elemente ausgebildet ist, wobei das entsprechende Reibungsmoment mittels des von dem dritten Stift auf eine der Flanken der dritten Nut ausgeübten Auflagedrucks an das Abtriebsorgan angelegt wird.

14. Differential nach Anspruch 13, dadurch gekennzeichnet, daß der genannte dritte radiale Stift (120a; 120b) drehfest mit der dem Planetenrad (105a; 105b) entsprechenden Abtriebswelle (107a; 107b) verbunden ist und daß die dritte radiale Nut (122a; 122b) in diesem Planetenrad ausgebildet ist.

15. Differential nach irgendeinem der Ansprüche 12 bis 14, dadurch gekennzeichnet, daß das Antriebsorgan das Hohlrad (103a) des Umlaufgetriebes umfaßt und daß das zweite Abtriebsorgan den Planetenradträger (104a) des Umlaufgetriebes umfaßt, wobei mindestens ein vierter Stift (129) drehfest mit dem Planetenradträger verbunden ist und in eine vierte radiale Nut mit einem V-förmigen Querschnitt (130) eingreift, die in einem Organ ausgebildet ist, das fest mit der dem Planetenradträger entsprechenden Abtriebswelle (106a) verbunden ist, wobei das Reibungsmoment mittels dieses vierten Stifts von der genannten Abtriebswelle auf den Planetenradträger übertragen wird.

16. Differential nach Anspruch 15, dadurch gekennzeichnet, daß der vierte radiale Stift in einem Gegendruckorgan (125) montiert ist, das mit dem Planetenradträger drehfest verbunden ist, wobei die Verbindungsmittel zwischen dem Hohlrad und diesem Gegendruckorgan angeordnet sind.

17. Differential nach irgendeinem der Ansprüche 15 und 16, dadurch gekennzeichnet, daß das Planetenrad und das genannte fest mit der Abtriebswelle verbundene Organ so montiert sind, daß sie miteinander in Anschlag sind, und im Verhältnis zum Gehäuse des Differentials axial gleitend angeordnet sind.

18. Differential nach irgendeinem der Ansprüche 12 bis 14, dadurch gekennzeichnet, daß das Antriebsorgan den Planetenradträger (104b) des Umlaufgetriebes umfaßt und daß das zweite Abtriebsorgan das Hohlrad (103b) des Umlaufgetriebes umfaßt, wobei mindestens ein fünfter radialer Stift (149) drehfest mit der dem Hohlrad entsprechenden Abtriebswelle (106b) verbunden ist und in eine fünfte radiale Nut mit einem V-förmigen Querschnitt (151) eingreift, die in dem Hohlrad ausgebildet ist, wobei das Reibungsmoment mittels dieses fünften Stifts von dieser Abtriebswelle auf das Hohlrad übertragen wird.

19. Differential nach Anspruch 18, dadurch gekennzeichnet, daß das Hohlrad im Verhältnis zum Gehäuse des Differentials axial unbeweglich montiert ist und daß die Verbindungsmittel zwischen diesem Hohlrad und dem Planetenrad angeordnet sind.

20. Differential nach irgendeinem der Ansprüche 18 und 19, dadurch gekennzeichnet, daß der fünfte Stift in einem Organ (150) montiert ist, das fest mit der genannten Abtriebswelle verbunden ist, wobei dieses Organ und das Planetenrad miteinander in Anschlag sind und im Verhältnis zum Gehäuse des Differentials gleitend angeordnet sind.

21. Differential nach irgendeinem der Ansprüche 12 bis 20, dadurch gekennzeichnet, daß es elastische Vorbelastungsmittel (133, 141; 147) für die Verbindungsmittel umfaßt.

22. Differential nach irgendeinem der Ansprüche 4, 10, 13, 15 und 18, dadurch gekennzeichnet, daß jeweils der erste, zweite, dritte, vierte oder fünfte Stift durch einen Nocken (201) ersetzt ist, der am Boden der Nut (205) und in einen Versatz (203) eingreift, welcher in dem Organ (200), das ursprünglich den Stift getragen hat, ausgebildet ist.

23. Differential nach Anspruch 22, dadurch gekennzeichnet, daß der Nocken einen im wesentlichen dreieckigen Querschnitt aufweist, wobei eine seiner Spitzen (204) in die Nut und seine gegenüberliegende Basis (202) in den Versatz eingreift.

24. Differential nach irgendeinem der Ansprüche 22 und 23, dadurch gekennzeichnet, daß das Organ (206), in dem die Nut ausgebildet ist, und das Organ, in dem der Versatz ausgebildet ist, Anschläge (207, 208) aufweisen, um ihre relative winkelige Verschiebung zu begrenzen.
